# EUROPÄISCHE PATENTSCHRIFT

(11) **EP 2 357 153 B1**
(45) Veröffentlichungstag und Bekanntmachung des Hinweises auf die Patenterteilung: **25.05.2016**
(21) Anmeldenummer: 10015606.6
(22) Anmeldetag: 14.12.2010
(51) Int. Cl.: C01B 21/04, B23K 26/14

(54) **Verfahren zur vor Ort Herstellung von Stickstoff**
Method for on-site production of nitrogen
Procédé de fabrication d'azote sur place

(30) Priorität: 14.12.2009 DE 102009058054
(43) Veröffentlichungstag der Anmeldung: 17.08.2011
(73) Patentinhaber: Airco SystemDruckluft GmbH, 65933 Frankfurt (DE)
(72) Erfinder: Sell, Carsten, 60329 Frankfurt am Main (DE); Schröder, Thorsten, 65434 Flörsheim (DE)
(74) Vertreter: Mai, Dörr, Besier

(56) Entgegenhaltungen:
- EP-A1- 0 411 254
- EP-A2- 0 324 171
- DE-A1- 3 743 008
- DE-T2- 69 507 575
- US-A1- 2004 079 359

## Beschreibung

Die vorliegende Erfindung bezieht sich auf die vor Ort Herstellung von Stickstoff. Dies meint die Erzeugung und Bereitstellung von reinem, insbesondere hoch- oder ultrareinem, Stickstoff zum Einsatz vor Ort, was in der Fachwelt auch unter dem Begriff "onsite" - Erzeugung bekannt ist. Insbesondere betrifft die Erfindung ein Verfahren zur Herstellung von verdichtetem, reinem, insbesondere hochreinem oder ultrareinem, Stickstoff unter Verwendung eines Stickstoffgenerators zur vor Ort Herstellung und zur Speicherung bis zum Verbrauch von verdichtetem 3.0, insbesondere 5.0 oder reinerem, Stickstoff.

Stickstoff ist das am häufigsten zur Inertisierung in der Industrie eingesetzte Schutzgas. Geliefert wird Stickstoff meistens in Druckflaschen oder durch Aufstellung einer Tankanlage (Überdruckkessel) vor Ort, das heißt also beim Anwender. Überall dort, wo Inertgas zur Inertisierung, Brandvermeidung, Korrosionsvermeidung, zum bleifreien Löten, zur Inertisierung von Tankanlagen, zum Ausblasen von Behältern, beim Rapid Prototyping, für LC-MS Anwendungen, als Reifengas oder als Prozessgas bei lösemittelhaltigen Prozessen benötigt wird, findet die Stickstoffinertisierung ihre Anwendung. Heutzutage kann Stickstoff durch einen Stickstofferzeuger schon bei sehr geringen Bedarfsmengen direkt aus der Druckluft des Anwenders gewonnen werden.

Stickstoff ist je nach Reinheitsgrad in verschiedenen Qualitäten erhältlich. Die Bezeichnung "3.0 Stickstoff" meint einen maximalen Restgehalt an Sauerstoff von 1000 ppm. Die Bezeichnung "4.0 Stickstoff" bezieht sich auf maximale Restsauerstoffgehalte von 100 ppm, die Bezeichnung "5.0 Stickstoff" auf 10 ppm. Auch Zwischenstufen werden nachgefragt und geliefert, so wie etwa "4.5 Stickstoff", welcher einen zulässigen Gehalt an Restsauerstoff von höchstens ca. 50 ppm aufweist.

Reiner 4.0 bis 4.5 Stickstoff, insbesondere hochreiner 5.0 Stickstoff, wird beim Laserschneiden als so genanntes Schneidgas eingesetzt. Angewendet wird reiner, insbesondere hochreiner Stickstoff auch als Schutzgas in der Lebensmittel- oder Pharmaindustrie zur Begasung und zum Schutz empfindlicher Lebensmittel beziehungsweise Pharmaka. In der neueren Zeit hat es sich als besonders wirtschaftlich erwiesen, den industriell benötigten reinen, hoch- oder ultrareinen Stickstoff, letzterer hat einen Restsauerstoffgehalt von kleiner 10 ppm, nicht vom Hersteller zu beziehen sondern selbst vor Ort - mithin also beim Endverbraucher oder Anwender selbst - zu erzeugen. Hierzu kann man sich beispielsweise der an sich bekannten und bereits eingeführten PSA-Technologie bedienen. Die Abkürzung PSA steht in diesem Zusammenhang für "Pressure Swing Adsorption".

Wird die Anlage für Laserschneidanwendungen eingesetzt spricht man auch von der PSAL-Technologie, was nichts anderes bedeutet als PSA-Technologie für Laseranwendungen. Hierbei wird Stickstoff vor Ort aus Druckluft erzeugt, welche gegebenenfalls auch erst vor Ort erzeugt wird oder werden kann. Die PSA-Technologie zur Abtrennung des Sauerstoffs aus Druckluft nutzt dabei das unterschiedliche Adsorptionsverhalten an spezieller Aktivkohle von Sauerstoff und CO₂ einerseits und Stickstoff sowie weiteren inerten Luftbestandteilen, wie Edelgasen, andererseits. Zugleich macht man sich auch die Druckabhängigkeit der Adsorption und Desorption von Sauerstoff an Aktivkohle zu Nutze. Das so erzeugte saubere, trockene und reine bis ultrareine Stickstoffgas wird anschließend hoch verdichtet und dann bis zur Abnahme und zum Verbrauch in hoch verdichtetem Zustand in geeigneter Weise zum Beispiel in einer Druckflasche, in einem Drucktank oder in Druckflaschenbündeln bevorratet. Die PSA(L) - Technologie vereint bereits eine Vielzahl von Vorteilen in sich. So sind die Stickstoffkosten sehr niedrig. Es steht ein großer Stickstoffspeicher zur Verfügung, welcher Verbrauchsspitzen abpuffern kann. Die Speicher (Stickstoffpuffer) lassen sich während etwaiger Produktionsunterbrechungen regenerieren. Die Stickstoffreinheit kann maßgeschneidert eingestellt werden und nicht zuletzt handelt es sich dabei um eine sehr energieeffiziente Technologie.

Zum druckschriftlichen Stand der Technik werden folgende Dokumente genannt:
D1 = DE 695 07 575 T2,
D2 = US 2007/0227360 A1 und
D3 = US 6 904913 B2 und
D4 = EP 0 411 254 und
D5 = DE 37 43 008 A1

Die D1 bezieht sich auf die Verwendung von Stickstoff als Schutzgas bei "Laserstrahlmaschinen". Offenbart werden Verfahren und Vorrichtung zur Zufuhr eines stickstoffreichen Gases zu einer Laserstrahlwerkzeugmaschine, wobei Luft komprimiert wird, die komprimierte Luft in ein stickstoffreiches Gas und Sauerstoff getrennt wird, und das stickstoffreiche Gas der Laserstrahlwerkzeugmaschine als Schutzgas zugeführt wird. Gekennzeichnet ist das Verfahren der D 1 dadurch, dass auch der Pfad zwischen Laseroszillator und Laserstrahlwerkzeugkopf mit Schutzgas beaufschlagt wird. Hierbei handelt es sich um eine sinnvolle Verfahrensvariante zur Verbesserung der Sicherheit des Verfahrens.

Die D2 befasst sich näher mit der PSA - Technologie. Insbesondere bezieht sich die D2 auf eine tragbare Sauerstoffanreicherungsvorrichtung, beispielsweise für medizinische Zwecke. Die D2 macht sich den Umstand zunutzen, dass man mittels der PSA - Technologie nicht nur Stickstoff sondern auch den abgetrennten Sauerstoff erzeugen und verwenden kann. Dies ist dem Fachmann zwar bekannt, dem Fachmann ist aber genauso bekannt, dass die physikalischen Eigenschaften von komprimiertem Stickstoff und komprimiertem Sauerstoff voneinander verschieden sind und dass beide komprimierten Gase eine differenzierte Behandlung verlangen. Im speziellen bezieht sich die Figur 40 aus der D2 auf ein so genanntes "transfill system 580". Diese Ausführungsform dient zur Zuführung von Sauerstoff mittels einer Vorrichtung 10 aus einem in der Figur nicht näher dargestellten Reservoir 18 an einen Verbraucher. Zu diesem Zweck wird der Sauerstoff aus der Vorrichtung 10 in einen Verdichter 582 geleitet. Nach der Verdichtung wird der Sauerstoff in einen tragbaren Sauerstofftank 584 geführt, von wo der verdichtete Sauerstoff dem Anwender zugeführt werden kann. Der Anwender kann laut Absatz [0284] der D2 den komprimierten Sauerstoff über ein Ventil 586 atmen. Es ist aber auch möglich, dass der Benutzer Sauerstoff direkt aus der Vorrichtung 10 (Konzentrator) über den Zuführweg 588 einatmet, oder beides. Der Sauerstoff muss also nicht zwingend über den

Verdichter 582 und den Tank 584 abgenommen werden. Dennoch wird der Vorrichtung 10 entnommene Sauerstoff zwingend dem Benutzer zugeführt, sei es über den Weg 588 und / oder den Weg 582, 584 und 586.

Aus der D3 ist ebenfalls ein Verfahren zur Befüllung eines tragbaren Gefäßes mit therapeutischem Gas sowie die Verabreichung des therapeutischen Gases an einen Patienten bekannt. Wieder handelt es sich bei dem benutzten Gas um Sauerstoff, welcher mittels der PSA - Technologie erzeugt wird. So verdeutlicht Figur 2 aus der D3, dass der mittels PSA in der Vorrichtung 10 erzeugte Sauerstoff in einen Nachverdichter 16 geführt wird, wo er auf ca. 2200 [Psi] (entsprechend ca. 200 Bar) verdichtet wird. Über eine Leitung 20 gelangt der verdichtete Sauerstoff in die Speicher 44 und / oder 14, von wo der Sauerstoff einem Patienten über den Druckminderer 40 und über den Port 41 verabreicht werden kann. Die D3 berichtet unter anderem davon, dass die Speicher 14 oder 44 kontaminiert sein könnten und wie man dieses Problem lösen kann. So schlägt die D3 im Falle der Kontamination des portablen Zylinders 14 vor, dass man den Speicher 14 zyklisch füllt und evakuiert, um die kontaminierenden Stoffe wegzuspülen. Zu diesem Zwecke wird der Gehalt des verdichteten Sauerstoffs an Verunreinigungen mittels des Gassensors 28 über die Leitung 20 und das Ventil 26 gemessen. Liegt der Gehalt an Verunreinigungen über einem vorbestimmten Schwellenwert, werden die Speicher 14 und / oder 44 gespült und evakuiert.

Obwohl diese Methode wirksam ist, ist sie doch extrem aufwändig, da die kompletten Speicher teils mehrfach gefüllt und entleert (evakuiert) werden müssen, wobei das bis dato in den Speichern enthaltene komprimierte Sauerstoffgas offenbar verworfen werden muss. Hier wäre im Bezug auf Sauerstoff ein deutlich effizienteres und einfacheres Verfahren sehr wünschenswert.

Aus der D4 ist es bekannt, 99,5 %-igen Stickstoff, der aus einer PSA stammt, auf ca. 5,5 bar (80 psig) zu verdichten, und über einen Membranfilter zu trocknen. Ein Teil des Produktstickstoffs kann auf die Permeatseite des Membranfilters abgezweigt und zur Kompression rezykliert werden. Gemäß D4 ist es auch möglich, den aus der PSA kommenden Stickstoff unverdichtet zur Spülung des Membranfilters einzusetzen und dann abzublasen.

In der D5 ist eine mit Kohlenstoff-Molekularsieb gefüllte Ein-Absorberanlage zur Gewinnung von Stickstoff mittels Druckwechseltechnik beschrieben. Die Anlage ist ständig betriebsbereit, kann unabhängig vom Produktgasspeicherdruck betrieben werden und der erzeugte Stickstoff hat beim Austreten aus dem Absorptionsbehälter stets die gleiche hohe Reinheit.

Im Bezug auf Stickstoff welchen man aus der PSA gewinnt hat man bei der "onsite - Herstellung" ebenfalls noch einigen Raum für Verbesserungen.

Der vom Anwender aus dem Tank oder den Flaschenbündeln zum Verbrauch während der Produktionszeiten entnommene Stickstoff kann entweder kontinuierlich oder diskontinuierlich erzeugt und ersetzt werden. In der Produktion begegnet man nun vor allem beim Laserschneiden häufig dem Phänomen, dass nach einer Produktionsunterbrechung oder zu Beginn einer Arbeitsschicht erzeugte Werkstücke an den Schnittflächen unerwünschte Verfärbungen aufweisen. Derart verfärbte Werkstücke sind Ausschuss und müssen verworfen werden. Im Laufe der Produktion, meist innerhalb der ersten Minuten, wird das Ausmaß der Verfärbungen am Werkstück geringer und nach einem Dauerbetrieb von fünf oder mehr Minuten entsprechen die Schneidergebnisse wieder dem geforderten Standard. Es wäre nun aber durchaus wünschenswert, bereits mit der ersten Abnahme von Stickstoff perfekte Schneidergebnisse zu erzielen. Auch in der Lebensmittel- oder Pharmaindustrie sind Qualitätsminderungen zu Beginn eines Produktionszyklus in der Regel nicht tolerabel, da auch und gerade in diesem Einsatzgebiet höchste Qualitätsstandards gelten. Es besteht mithin die Aufgabe, Verfahren zur vor Ort Herstellung von hoch- oder ultrareinem Stickstoff so weiterzubilden, dass Stickstoff von perfekter Qualität auch unmittelbar nach Anfahren der Anlage abgenommen und verbraucht werden kann.

Die zuvor geschilderte Aufgabe wird gelöst durch ein Verfahren mit allen Merkmalen des Anspruchs 1. Bevorzugte Ausführungsformen werden in den abhängigen Ansprüchen geschützt.

Die Erfindung beschreibt ein Verfahren zur Herstellung von verdichtetem reinem, hochreinem oder ultrareinem Stickstoff mittels eines Stickstoffgenerators, bei welchem Verfahren man
a) Stickstoff aus Druckluft erzeugt;
b) den in a) erzeugten Stickstoff mittels eines Verdichtungsmittels auf einen Druck im Bereich von größer 10 bis etwa 400 bar verdichtet; und
c) den gemäß b) verdichteten Stickstoff speichert;
wobei sich das Verfahren dadurch auszeichnet, dass man beim Anfahren oder Einschalten des Verdichtungsmittels oder sobald der Sauerstoffgehalt des in Schritt b) verdichteten Stickstoffs einen vorgegebenen Grenzwert überschreitet den in Schritt b) des Verfahrens verdichteten Stickstoff für einen bestimmten frei vorwählbaren oder regelbaren Zeitraum ab- oder umleitet, so dass er für den genannten vorwählbaren oder regelbaren Zeitraum nicht in die Mittel zur Speicherung geleitet wird, wobei man den Nach- oder Hochdruckverdichter in dem Zeitraum spült, in dem der verdichtete Stickstoff in einem Kreis geführt oder abgeblasen wird, wobei der im Kreis geführte verdichtete Stickstoffstrom wenigstens ein Filtermaterial und/oder wenigstens einen Abscheider passiert.

Beim genannten Stickstoffgenerator handelt es sich um einen Generator zur vor Ort Herstellung und zur Speicherung bis zur Abnahme oder zum Verbrauch von verdichtetem, reinem, hochreinem 5.0 oder ultrareinem Stickstoff,
umfassend in Strömungsrichtung des Stickstoffs miteinander verbunden
A) Mittel zur Stickstofferzeugung aus Druckluft;
B) Verdichtungsmittel zur Verdichtung des in A) erzeugten Stickstoffs auf einen Druck im Bereich von größer 10 bis etwa 400 bar aufweisend einen Nach- oder Hochdruckverdichter; und
C) Mittel zur Speicherung des in B) verdichteten Stickstoffs;
wobei
stromaufwärts der Mittel zur Speicherung Mittel zur Ab- und/oder Umleitung des verdichteten Stickstoffs vorgesehen sind.

Durch die zuvor geschilderte Verfahrensweise gelingt es auf nicht ohne Weiteres vorhersehbare Weise, die Verfärbungen der Werkstücke beim Laserschneiden bereits unmittelbar zu Beginn der Produktion zu vermeiden und somit die von den Verarbeitern und Anwendern geforderte Qualität jederzeit während der Produktion einzuhalten. Ebenso gelingt es, die Qualität des Inertisierungsstickstoffs, beispielsweise beim Einsatz in der Lebensmittel- oder Pharmaindustrie, konstant auf einem gefordert hohen Standard zu halten.

Insbesondere wird durch die Erfindung verhindert, dass während einer Produktionsunterbrechung, beispielsweise über Nacht oder zwischen zwei Schichten, in die Mittel zur Verdichtung des Stickstoffs eingedrungene Luft in die Mittel zur Speicherung des verdichteten Stickstoffs gelangen kann, so dass die vom Verbraucher abgenommene Stickstoffqualität stets und zu jeder Zeit gewährleistet werden kann.

Dabei wird mit der Erfindung erstmalig und innovativ vorgeschlagen, nicht die Speichermittel von kontaminierenden Stoffen zu befreien, beispielsweise durch wiederholte Spül- und Evakuierzyklen. Im Gegenteil zum Stand der Technik setzt die Erfindung einen Schritt vorher an und verhindert erfolgreich, dass kontaminierter Stickstoff überhaupt in die Speichermittel gelangen kann. Zu diesem Zweck werden gemäß der Erfindung die Verdichtungsmittel, insbesondere der Nach- oder Hochdruckverdichter, beispielsweise nach einer Unterbrechung der Produktion, solange mit verdichtetem Stickstoff gespült, bis nur noch den vorher definierten Anforderungen im Bezug auf die Reinheit, insbesondere den Restsauerstoffgehalt, entsprechender Stickstoff entnommen und in die Mittel zur Speicherung gelangen kann.

Wichtig ist auch der Umstand, dass sich das Verfahren der Erfindung auf eine Anlage bezieht, welche vor Ort, dass heißt beim Anwender und Stickstoffverbraucher, aufgestellt und benutzt wird. In diesem Zusammenhang ist es von Vorteil, wenn die Anlage fest mit einem Abnehmer, beispielsweise einer Laserschneidanlage oder einer Befüllungs- oder Verpackungsanlage auf der Betriebsfläche des Anwenders, verbunden ist. Dies kann zum Beispiel über Druckleitungen geschehen, welche von den Speichermitteln den Stickstoff direkt an etwaige Abnahmevorrichtungen des Anwenders liefern.

Der beim erfindungsgemäßen Verfahren eingesetzte Stickstoffgenerator umfasst wenigstens drei Einheiten, wobei die örtliche Reihenfolge der Einheiten im Bezug auf die grundsätzliche Fließrichtung des Stickstoffs definiert wird. Dabei verläuft der Weg des Stickstoffs prinzipiell von den Mitteln zur Erzeugung in die Mittel zur Verdichtung und von dort in die Mittel zur Speicherung. Die genannten Mittel können entweder direkt miteinander verbunden sein, beispielsweise über geeignete Leitungen, es können jedoch auch weitere Einheiten vor den Erzeugungsmitteln oder nach den Speichermitteln oder zwischen den Mitteln zur Erzeugung, Verdichtung und Speicherung vorgesehen sein, ohne von der Erfindung abzuweichen.

Mit den Mitteln zur Erzeugung von Stickstoff wird Stickstoff aus verdichteter Umgebungsluft gewonnen. Dabei greifen die Mittel zur Erzeugung von Stickstoff auf verdichtete Umgebungsluft zurück, welche in die Stickstofferzeugungsmittel eingeleitet wird. Die verdichtete Umgebungsluft, auch als Druckluft oder Pressluft bekannt, kann entweder aus gegebenenfalls vor Ort beim Anwender vorhandenen Einrichtungen stammen, sie kann jedoch auch in einer weiteren, den Stickstofferzeugungsmitteln vor geschalteten Verdichtereinheit, beispielsweise einem für den genannten Zweck bekannten, einfachen handelsüblichen Kompressor, aus Umgebungsluft erzeugt werden. Der Eingangsdruck der Pressluft in den Stickstoffgenerator im engeren Sinne kann über einen relativ weiten Bereich variieren. So kann der Eingangsdruck im Bereich von etwa fünf bis zehn bar liegen. Bevorzugt ist ein Eingangsdruck von größer als fünf bar, besonders bevorzugt sind etwa sieben bis acht bar. Bevorzugt sind auch Eingangsdrucke von kleiner als 10 bar. Noch mehr bevorzugt sind Drucke im Bereich von größer als 5 und kleiner als 10 bar.

Zu den im Rahmen des Verfahrens der Erfindung einsetzbaren Mitteln zur Erzeugung von Stickstoff gehört unter anderem ein Stickstoffgenerator im engeren Sinne der Bezeichnung, welcher die Trennung von Stickstoff von den anderen Bestandteilen der verdichteten Umgebungsluft gestattet. Bevorzugt weisen die Mittel zur Erzeugung von Stickstoff hierzu Trennmittel auf, welche sich Unterschiede in den Eigenschaften der verschiedenen Bestandteile der Druckluft zu Nutzen machen. Solche Eigenschaftsunterschiede umfassen beispielsweise die Molekülgröße oder die Adsorptionseigenschaften an speziellen Adsorbentien. So kann es zweckmäßig sein, zur Verwirklichung der Erfindung einen Stickstoffgenerator im engeren Sinne einzusetzen, welcher zur Abtrennung des Stickstoffs eine Membrananlage umfasst. Ein im Rahmen der Erfindung ganz besonders bevorzugtes Trennprinzip macht sich jedoch die Affinitätsunterschiede der Luftbestandteile zu speziellen Absorptionsmedien zu Nutzen.

Luftzerlegungsanlagen, welche nach einem kryogenen Trennprinzip arbeiten sind für die Erfindung weniger geeignet, da sie insbesondere aufgrund der rektifikatorischen Luftauftrennung im Allgemeinen zu aufwendig für die vor Ort Erzeugung von Stickstoff beim Erzeuger sind.

Besonders zweckmäßig handelt es sich bei den Stickstofferzeugungsmitteln um eine Vorrichtung oder Anlage, welche nach der so genannten PSA(L) (Pressure Swing Adsorption (für Laserschneidanwendungen)) - Technologie arbeitet. Das PSA-Verfahren beruht dabei auf den physikalischen Adsorptionseigenschaften speziell behandelter Molekularsiebe. Der Stickstofferzeuger oder - generator im engeren Sinne weist vorzugsweise eine Vorfiltration zur Entfernung von Verunreinigungen wie Feuchtigkeit, Öldämpfen, Partikeln und Kohlenwasserstoffen aus der in den Stickstofferzeuger einströmenden Druckluft auf. Daneben umfasst das Stickstofferzeugungsmittel essentiell wenigstens zwei miteinander verbundene Drucktanks, welche eine Füllung von den genannten speziellen Adsorptionsmitteln umfassen. Zu den für diesen Zweck bevorzugt einsetzbaren Adsorptionsmitteln gehören vor allem Kohlenstoffmolekularsiebe, so genanntes CMS. Im Zusammenhang mit diesen speziellen Kohlenstoffmolekularsieben spricht man häufig auch etwas unkorrekt von "Aktivkohle". Die mindestens beiden in Verbindung stehenden Drucktanks des Stickstoffgenerators werden nun bevorzugt so betrieben, dass eine kontinuierliche Stickstoffabtrennung und -versorgung gewährleistet wird. Dies erreicht man zweckmäßig durch intervallartiges Umschalten des einfließenden Druckluftstroms. Während ein Behälter in Betrieb ist und der Stickstoff über Kopf abgezogen werden kann, wird der andere durch Absenken des Drucks regeneriert. Die unerwünschten Gaskomponenten werden freigesetzt und an die Atmosphäre abgegeben. Auf diese Weise ist es möglich, einen kontinuierlichen Stickstoffstrom von höchster Reinheit, dass heißt mit geringem Restsauerstoffgehalt, zu erzeugen.

Die Mittel zur Erzeugung von Stickstoff aus Druckluft sind in der Lage, Stickstoff von gewünschter Reinheit aus verdichteter, vorzugsweise trockner und sauberer, Luft abzutrennen. Per Definitionem wird in dieser Anmeldung unter reinem Stickstoff ein Stickstoff mit einem Restsauerstoffgehalt von höchstens 1000 ppm verstanden. Die Bezeichnung dafür lautet 3.0 Stickstoff. Per Definitionem wird in dieser Anmeldung unter hochreinem Stickstoff ein Stickstoff mit einem Restsauerstoffgehalt von höchstens 10 ppm verstanden. Die Bezeichnung dafür lautet 5.0 Stickstoff. Per Definitionem wird in dieser Anmeldung unter ultrareinem Stickstoff ein Stickstoff mit einem Restsauerstoffgehalt von höchstens 5 ppm verstanden. Die Bezeichnung dafür lautet 5.5 Stickstoff.

Weiterhin ist es im Rahmen der Erfindung zweckmäßig, wenn die Mittel zur Erzeugung von Stickstoff so ausgebildet sind, dass der aus der Umgebungs-Druckluft abgetrennte Stickstoff bis auf etwa 10 bar verdichtet werden kann. Hierbei wird gewährleistet, dass der Ausgangsdruck des abgetrennten Stickstoffs etwa dem Eingangsdruck der Pressluft von sieben bis acht bar in die Drucktanks der Mittel zur Erzeugung (Abtrennung) des Stickstoffs entspricht.
Die Mittel zur Erzeugung des Stickstoffs weisen zweckmäßig einen oder mehrere Produkttanks für die Zwischenlagerung des vorzugsweise auf etwa sieben bis acht bar verdichteten und abgetrennten Stickstoffs auf. Der oder die Produkttanks stehen in Fließverbindung mit den Drucktanks der Stickstofferzeugungsmittel und dienen zum Auffangen und Zwischenlagern des vor verdichteten Stickstoffs. Über das Speichervolumen der Produkttanks werden Erzeugungsspitzen abgefangen und der Stickstoffstrom für die Nachverdichtung des Stickstoffs kann gleichmäßiger ausgestaltet werden.

Die Mittel zur Erzeugung von Stickstoff stehen mit den Mitteln zur Verdichtung des erzeugten Stickstoffs so in Verbindung, dass erzeugter hoch- oder ultrareiner Stickstoff, der vorzugsweise auf bis zu etwa sieben bis acht bar verdichtet ist, vom Erzeugungsmittel in das Verdichtungsmittel strömen kann, zweckmäßig über eine entsprechende Druckleitung. Vorzugsweise ist oder sind wie bereits im vorherigen Absatz geschildert zwischen Erzeugungsmittel und Verdichtungsmittel noch ein beziehungsweise eine Mehrzahl von Produkttanks vorgesehen. Der oder die Produkttank(s) dient (dienen) zur Sammlung des erzeugten Stickstoffs und kann (können) aufgrund seines (ihres) Volumens einen konstanten Durchfluss sowie eine konstante Reinheit des vor verdichteten Stickstoffs gewährleisten.

Die Mittel zur Verdichtung umfassen im Rahmen der Erfindung wenigstens einen Nach- und / oder Hochdruckverdichter. Die Mittel zur Verdichtung sind stromab der Erzeugungsmittel angeordnet und sind in der Lage, den von den Erzeugungsmitteln bevorzugt über den wenigstens einen Produkttank einströmenden oder angesaugten Stickstoff von seinem Eingangsdruck im Bereich von größer 1 bis etwa 10 bar auf einen Ausgangsdruck im Bereich von größer als 10 bar bis hin zu etwa 400 bar zu verdichten. Zweckmäßig werden für diese "Nachverdichtung" Mittel eingesetzt, welchen einen Druckbereich von größer als 10 bis etwa 300 bar abdecken. Besonders zweckmäßig sind Nachverdichter oder ist eine Nachverdichtung im Bereich von 200 bis 300 bar. Noch mehr bevorzugt ist hierfür ein Bereich von 220 bis etwa 270 bar. Zu den im Rahmen der Erfindung mit Erfolg einsetzbaren Nachverdichtern gehören an sich bekannte Hochdruckverdichter oder Kompressoren. Im Rahmen der Erfindung können dabei alle handelsüblichen Typen von Hochdruckverdichtern eingesetzt werden. So ist es möglich, zwei- oder mehrstufige Kolbenkompressoren, Schraubenverdichter, Rotationskompressoren oder auch Membrankompressoren einzusetzen. Von diesen sind Kolbenkompressoren, insbesondere zweistufige, noch mehr bevorzugte dreistufige Kolbenkompressoren für die Erfindung von ganz besonderem Vorteil.

Einerseits ist es für die Erfindung möglich, so genannte ölfreie Kompressoren einzusetzen. Dies bedeutet, dass es ausgeschlossen ist, dass der zu verdichtende Stickstoff mit ölbehafteten Bauteilen des Kompressors in Berührung kommt. Diese Lösung ist allerdings recht aufwändig und insbesondere sind ölfreie Kompressoren deutlich teurer und wartungsintensiver als ölgeschmierte Kompressoren. Aus diesem Grund werden als Nachverdichter für den Stickstoffgenerator der Erfindung ölgeschmierte Kolbenkompressoren, ganz besonders drei oder vierstufige ölgeschmierte Kolbenkompressoren bevorzugt. Diese gewährleisten zweckmäßig in Verbindung mit einer Stickstoffaufbereitung ein besonders günstiges Preis/Leistungs-Verhältnis.

Daher ist es weiterhin zweckmäßig, dass die Mittel zum Verdichten des Stickstoffs Mittel zur Reinigung des nach zu verdichtenden und/oder des nach verdichteten Stickstoffs umfassen. Hierbei kann es sich beispielsweise um Filtermittel und/oder Abscheider handeln, welche der angesaugte und einfließende Stickstoff vor dem eigentlichen Verdichtungsvorgang durchströmen kann.

In einer bevorzugten Ausführungsform umfasst das Verdichtungsmittel wenigstens eine Filtereinrichtung, welche in der Lage ist, den Stickstoff auf Atemluftqualität aufzubereiten. Geeignete Filtereinrichtungen oder Filtermittel umfassen unter anderem Mikrofeinstfilter oder Aktivkohlefilter. Zweckmäßig weisen die Mittel zum Verdichten zwei hintereinander geschaltete Filtermittel oder Filtereinrichtungen auf, welche nach unterschiedlichen Trennprinzipien arbeiten. So kombiniert man zweckmäßig eine Ölabscheidungsstufe mit einer Öl Dämpfe Entfernung. Dabei sind die Filter zweckmäßig so angeordnet, dass angesaugter Stickstoff zunächst in eine erste Filterstufe einströmt. Nach Verlassen der ersten Filterstufe strömt der Stickstoff dann in eine zweite Filterstufe. In der ersten Filterstufe findet zweckmäßig die Ölabscheidung über eine Ölabscheiderpatrone statt. In der zweiten Filterstufe werden vorteilhaft Öldämpfe an Aktivkohle gebunden.

Die Mittel zum Verdichten des Stickstoffs stehen stromabwärts mit Mitteln zur Speicherung des hoch verdichteten Stickstoffs in Verbindung. Hierbei handelt es sich um Hochdruckvorratsspeicher beispielsweise in Form von geeigneten Tanks oder hochdruckfesten Gasflaschen oder Flaschenbündeln, welche mit dem Hochdruckverdichter über Druckleitungen verbunden sind.

Der beim Verfahren der Erfindung eingesetzte Stickstoffgenerator kennzeichnet sich insbesondere dadurch, dass stromaufwärts der Mittel zur Speicherung Mittel zur Ab- und/oder Umleitung des verdichteten Stickstoffs vorgesehen sind, welche es für einen bestimmten frei vorwählbaren oder regelbaren Zeitraum verhindern, dass verdichteter Stickstoff in die Mittel zur Speicherung geleitet ist, wobei vorgesehen ist, den Nach- oder Hochdruckverdichter in dem Zeitraum zu spülen, in dem verdichteter Stickstoff im Kreis geführt ist oder abgeblasen wird, wobei der im Kreis geführte Stickstoffstrom wenigstens ein Filtermaterial und/oder wenigstens einen Abscheider passiert. In diesem Zusammenhang kann die Kreisführung des verdichteten Stickstoffs dem Abblasen des Stickstoffs vorzuziehen sein. Es ist allerdings auch möglich, dass ein Abblasen vorzuziehen ist. Die Ab- oder Umleitungsmittel befinden sich weiterhin zweckmäßig stromabwärts des Nachverdichters. Auf die beschriebene Weise gelingt es, nach einem Produktionsstopp und einem sich daran anschließenden Anfahren der Erzeugungsanlage, die Einleitung von verdichtetem Stickstoff in die Mittel zur Speicherung für eine bestimmte Zeit, vorzugsweise im Bereich von 0,1 bis 20 Minuten, zweckmäßig im Bereich von 0,5 bis 10 Minuten und ganz besonders zweckmäßig im Bereich von 1 bis 5 Minuten, auszuschließen. Dabei ist die Zeit so gewählt, dass die Verdichtungsmittel in ausreichendem Maße mit reinem, hochreinem oder ultrareinem, verdichteten Stickstoff gespült werden, so dass nur Stickstoff von ausreichend hoher Güte in die Mittel zur Speicherung gelangen kann.

Die Mittel zur Ab- oder Umleitung des Stickstoffs können Ventile, Leitungen oder dergleichen umfassen. Dabei lässt sich der angestrebte "Spüleffekt" auf verschiedene Art und Weise verwirklichen.

So kann es in einer Variante des erfindungsgemäßen Stickstoffgenerators bevorzugt sein, dass die Mittel zur Ableitung des verdichteten Stickstoffs ein Ventil in einer Leitung umfassen, welche die Verdichtungsmittel und die Mittel zur Speicherung verbindet. Durch "Abblasen" des verdichteten Stickstoffs über einen definierten Zeitraum wird der Hochdruckverdichter gespült und eine mögliche Verunreinigung des Stickstoffs in den Stickstoffspeichermitteln verhindert.

In einer anderen bevorzugten Ausführungsform kann der erfindungsgemäße Stickstoffgenerator dadurch gekennzeichnet sein, dass das Ventil zur Ableitung des verdichteten Stickstoffs über eine Leitung mit einem Partikelfilter verbunden ist. In diesem Fall spricht man im Sinne der Erfindung von einem Ventil zur Umleitung des Stickstoffstroms. Bei dem Partikelfilter kann es sich beispielsweise um einen der Filter handeln, welcher standardmäßig zur Abscheidung von Verunreinigungen in den Verdichtungsmitteln vorhanden sein kann.

Es ist aber auch denkbar, dass ein Ventil zur Umleitung des Stickstoff mit noch einem weiteren Filter in Verbindung ist. In noch einer bevorzugten Ausführungsform kennzeichnet sich der Stickstoffgenerator insofern dadurch, dass der Partikelfilter zusätzlich mit einem Aktivkohlefilter verbunden ist.

Weiterhin kann es von besonderem Vorteil sein, wenn stromabwärts der Mittel zur Verdichtung des Stickstoffs (mithin des Nachverdichters) Mittel zur Bestimmung des Sauerstoffgehalts in Stickstoff vorgesehen sind. Solche Mittel zur online - Messung des Sauerstoffgehalts sind dem Fachmann bekannt und am Markt als Zubehör erhältlich. Bei der online - Sauerstoffsensorik for die industrielle Prozessmesstechnik verwendet man Sensoren, welche nach bekannten Verfahren arbeiten. So kann es sich beispielsweise um spezielle paramagnetische Messverfahren, bestimmte spektroskopische Lasermessverfahren oder Zirkoniumdioxidsensoren handeln, welche die Messung von Sauerstoffspuren im ppm-Bereich in Gasen wie Stickstoff zulassen.

Die von den Mitteln zur Bestimmung des Sauerstoffgehalts ermittelten Werte lassen sich zweckmäßig zur Regelung der Dauer der Öffnung der Ab- oder Umleitung des Stickstoffstroms stromaufwärts der Stickstoffspeichermittel einsetzen. So ist es bevorzugt, den Stickstoffstrom solange zur Spülung des Nachverdichters ab- oder umzuleiten, bis ein vorgegebener Höchstwert für den Sauerstoffgehalt des nach verdichteten Stickstoffs nicht mehr überschritten wird. Dies kann durch einen an sich bekannten Mess- und Regelkreis erreicht werden.

Das Verfahren der Erfindung unter Verwendung des hierin beschriebenen Stickstoffgenerators dient zur Erzeugung von reinem Stickstoff mit einem maximalen Restsauerstoffgehalt von 1000 ppm, vorzugsweise von hochreinem Stickstoff mit einem maximalen Restsauerstoffgehalt von 10 ppm oder von ultrareinem Stickstoff mit einem maximalen Restsauerstoffgehalt von 5 ppm.

Bevorzugt dient der erzeugte Stickstoff zur Anwendung als Schutzgas in der Lebensmittelindustrie.

Weiters bevorzugt dient der erzeugte Stickstoff zur Anwendung als Schutzgas für Laserschneid-Anwendungen.

In einer günstigen Verfahrensvariante spült man dann die Verdichtungsmittel für den bestimmten vorwählbaren oder regelbaren Zeitraum mit vom Verdichtungsmittel erzeugten und verdichteten Stickstoff. Hier kann es zweckmäßig sein, den verdichteten Stickstoff im Kreis zu führen, wobei der im Kreis geführte verdichtete Stickstoffstrom wenigsten ein Filtermaterial und/oder wenigstens einen Abscheider passieren muss.

In zweckmäßiger Verfahrensmodifikation wird der Hochdruckverdichter bei jedem Anfahren für einen Zeitraum von 0,1 bis 20 Minuten, besonders zweckmäßig von 1 bis 5 Minuten mit Stickstoff gespült und der Spülstickstoff verworfen.

Die Spülung des Hochdruckverdichters kann man routinemäßig nach jedem Anfahrvorgang durchrühren. Es kann aber auch bevorzugt sein, die Spülung in Abhängigkeit von gemessenen Verunreinigungen zu regeln. Das erfindungsgemäße Verfahren zeichnet sich in bevorzugter Verfahrensabwandlung dadurch aus, dass man vor Ort den Gehalt an Verunreinigungen des den Hockdruckverdichter verlassenden Stickstoffs bestimmt und den Spülvorgang solange fortsetzt, bis der den Hochdruckverdichter verlassende Stickstoff die vorgewählte Reinheit aufweist.

Noch eine bevorzugte Verfahrensabwandlung zielt daraufhin, dass man den Spülvorgang solange fortsetzt, bis der Gehalt des Stickstoffs an Verunreinigungen gleich oder kleiner 10 ppm beträgt.

Nachfolgend wird die Erfindung eingehender an Hand eines Beispiels unter Verweis auf die beigefügten Figuren eingehender erläutert.

In den Figuren zeigen:
Figur 1: ein schematisches, vereinfachtes Blockdiagramm einer Anlage (Stickstoffgenerators) zur Erzeugung von Stickstoff nach dem PSA(L)-Verfahren (Stand der Technik, der das Verständnis der Erfindung erleichtert);
Figur 2: ein Fließdiagramm einer PSA(L)-Anlage (Stickstoffgenerators) (Stand der Technik, der das Verständnis der Erfindung erleichtert); und
Figur 3: ein Fließdiagramm eines Kolbenkompressors als Verdichtungsmittel einer erfindungsgemäßen PSA(L)-Anlage.

Liste der in den Figuren verwendeten Bezugszeichen:
I = Schutzfiltration
II = Stickstofferzeuger
III = Stickstoffprodukt-Speicher
IV = Stickstoffvorratsspeicher für Hochdruckverdichter
V = Hochdruckverdichter
VI = Flaschenbündel
VII = Schutzfiltration
   1 = Drucktransmitter
   2 = Filter
   3 = Kugelhahn
   4 = elektrischer Kondensatableiter
   5 = Aktivkohleabsorber
   6 = Stickstoffgenerator
   7 = Speicherbehälter
   8 = 3-Wege-Kugelhahn
   9 = Druckanzeige
   10 = Sicherheitsventil
   11 = Druckregler
   12 = Drosselventil
   13 = Durchflussmesser
   14 = Vorratsspeicher
   15 = Magnetventil
   16 = Rückschlag- Unterdruckventil
   17 = Hochdruckverdichter
   18 = Flaschenbündel
   19 = Sauerstoffsensor
   20 = Gasanalyse
   21 = Steuereinheit
   22 = Alarmlampe mit Horn
   101 = Zwischenkühler
   102 = Druckanzeige
   103 = Verdichterstufe
   104 = Filter
   105 = Magnetventil
   106 = Pneumatikventil
   107 = Sicherheitsventil
   108 = Behälter für Kondensat
   109 = Nachkühler
   110 = Partikelfilter
   111 = Aktivkohlefilter
   112 = Rückschlagventile
   113 = Mindestdruckventil

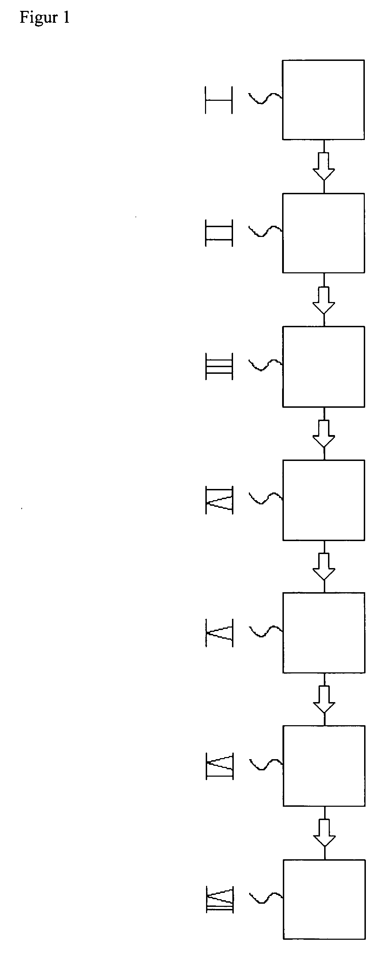

In Figur 1 ist ein schematisiertes Blockdiagramm einer vereinfachten PSA(L)-Anlage dargestellt. Dieses Blockdiagramm kann zur Verdeutlichung und zum Verständnis des prinzipiellen Aufbaus einer Anlage sowie der grundsätzlichen Abläufe in der Anlage dienen. Das Bezugszeichen I steht für eine Schutzfiltration. II bedeutet einen Stickstofferzeuger im engeren Sinn. Die Schutzfiltration I ist dem Stickstofferzeuger im engeren Sinn II vorgeschaltet und mit diesem verbunden. An den Stickstofferzeuger II schließt sich in Fliesrichtung ein mit dem Stickstofferzeuger verbundener Stickstoffproduktspeicher III an. Auf den Stickstoffproduktspeicher III folgt ein Stickstoffvorratsspeicher IV für einen Nachverdichter V. Der Nachverdichter V ist im konkreten Fall ein Hochdruck Verdichter, der stromaufwärts mit dem Stickstoffvorratsspeicher IV und stromabwärts mit einem Flaschenbündel VI in Strömungsverbindung steht. Schließlich folgt auf das Flaschenbündel VI in Strömungsrichtung des Gases stromabwärts gesehen eine weitere Schutzfiltration VII.

Von den in Figur 1 dargestellten Elementen einer PSA(L)-Anlage entsprechen der Stickstofferzeuger II, der Nachverdichter V sowie das Flaschenbündel VI den erfindungsgemäß essentiellen Mitteln zur Erzeugung (a), Verdichtung (b) beziehungsweise Speicherung (c) des nach verdichteten Stickstoffs.

Im gezeigten Beispiel fließt Druckluft oder Stickstoff von I in Richtung VII, wodurch die prinzipielle Strömungsrichtung definiert wird. Die "onsite" beim Anwender vorhandene oder in einem vor geschalteten Aggregat erzeugte Druckluft wird in die Schutzfiltration I eingeleitet und durchströmt diese. Nach der Schutzfiltration I gelangt die gereinigte Druckluft in den Stickstofferzeuger II im engeren Sinne. Dieser Stickstofferzeuger II gestattet die Abtrennung des Sauerstoffs aus der Druckluft und erzeugt reinen vor verdichteten Stickstoff mit einem Druck bis zu etwa 10 bar. Vom Stickstofferzeuger II gelangt der Stickstoff zunächst in einen Sammeltank III. Danach gelangt der abgetrennte vor verdichtete Stickstoff in einen Vorratsbehälter IV, in welchem ein Stickstoffreservoir für die Nachverdichtung mit dem Nachverdichter V besteht. Der Nachverdichter V saugt den Stickstoff aus dem Speicher IV an und verdichtet den vor verdichteten Stickstoff auf den gewünschten Druck im Bereich von größer als 10 bis etwa 400 bar. Der nach verdichtete Stickstoff gelangt dann in Speichermedien, wie etwa das Flaschenbündel VI, welches zur Aufnahme einer relativ großen Menge an Arbeitsstickstoff der gewünschten Reinheit ausgelegt ist. Vom Flaschenbündel VI kann der Stickstoff vom Verbraucher abgefordert werden, wobei er vorher noch eine weitere Schutzfiltration VII durchläuft, wodurch eine extrem hohe Produktqualität mit großer Sicherheit gewährleistbar ist.

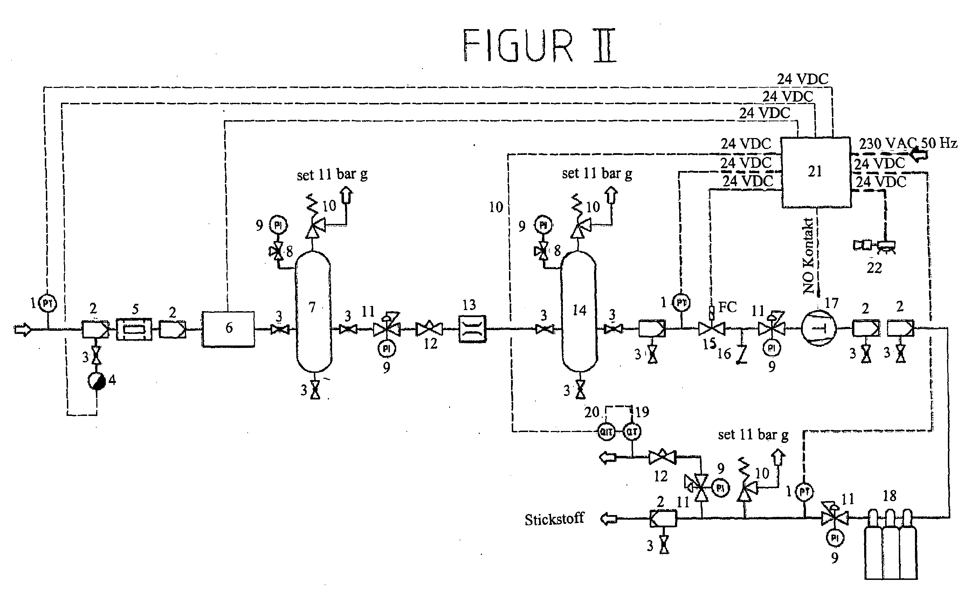

Bei Figur 2 handelt es sich um das Fließdiagramm einer PSA(L)-Anlage. Druckluft gelangt zunächst in den Filter 2. Der Filter 2 ist ein Kältetrockner, welcher über den Kugelhahn 3 mit einem elektrischen Kondensatableiter 4 verbunden ist. Der Kältetrockner 2 befreit die einströmende Druckluft von gegebenenfalls mitgeschlepptem Kondenswasser, welches über einen nicht näher dargestellten Druckluftkompressor oder generell über die Anwenderdruckluft mit eingeführt wird. Das Kondensat kann über den Kugelhahn 3 und den elektrischen Kondensatableiter 4 aus dem Druckluftstrom entfernt werden. Nach Entfernung des Kondenswasser gelangt die dergestalt getrocknete Druckluft in eine Schutzfiltration umfassend einen Aktivkohleabsorber 5 und ein weiteres Filter 2. Die Schutzfiltration befreit die Druckluft von Schmutzpartikeln, Öl-Aerosolen und Öldämpfen, welche z.B. durch ölgeschmierte Druckluftkompressoren mit eingebracht werden. Nach der Schutzfiltration strömt die getrocknete und gereinigte Druckluft in den eigentlichen Stickstoffgenerator oder -erzeuger im engeren Sinne 6. Im Stickstofferzeuger 6 wird nach dem Pressure Adsorption Swing (PSA) Verfahren der gewünschte Stickstoff aus der verdichteten Umgebungsluft (Druckluft) produziert. Dies geschieht über die Bindung der Sauerstoffanteile der Druckluft an bestimmte Adsorbentien, wie speziell behandelte Aktivkohle. Des weiteren verfügt der Stickstoffgenerator 6 über eine nicht näher dargestellte Sauerstoff-Analyse, welche kontinuierlich den Restgehalt an Sauerstoff im Stickstoff ermittelt. Vom Stickstoffgenerator 6 gelangt der Stickstoff in einen Produkt- oder Sammeltank 7, welcher ein Anlagenteil des Stickstoffgenerators 6 ist. Der Sammeltank 7 ist über einen Kugelhahn 3 mit dem Stickstofferzeuger 6 in Verbindung. Außerdem weist der Tank 7 eine Produktentnahmemöglichkeit über einen weiteren Kugelhahn 3 auf. Mittels eines weiteren Dreiwegekugelhahns 8 und eines Druckmessers 9 kann der Druck im Sammeltank 7 gemessen und angezeigt werden. Zur Vermeidung von Störungen weist der Sammeltank 7 weiterhin ein Sicherheitsventil 10 auf, welches den Stickstoff bei Druckanstieg auf unerwünschte Werte solange abbläst, bis ein voreingestellter Grenzwert, zum Beispiel 11 bar, nicht mehr überschritten wird. Grundsätzlich dient der Sammel- oder Produkttank zur Vergleichmäßigung der Produktqualität und zur Sicherstellung eines konstanten Durchflusses sowie einer konstanten Reinheit. Stromab vom Produkt 7 schließt sich in Richtung Vorratsspeicher 14 eine Durchflussmesser/Drosselventil/Druckminderer - Einheit an. Durch einen Kugelhahn 3 gelangt Stickstoff in einen Druckregler 11, welcher es gestattet, den Druck mittels einer Druckanzeige 9 anzuzeigen. Daran schließen sich in Strömungsrichtung ein Drosselventil 12 sowie ein Durchflussmesser 13 an. Diese Einheit ist für den gewünschten Durchfluss und Ausgangsdruck zuständig. Außerdem wird über diese Einheit der gewünschte Reinheitsgrad des Stickstoffs sicher gestellt. Der Durchflussmesser 13 steht über einen weiteren Kugelhahn 3 mit einem Vorratsspeicher 14 in Verbindung. Hierbei handelt es sich um den Vorratsspeicher 14 für den Hochdruckverdichter 17. Aufgabe des Vorratsspeichers 14 ist die Sicherstellung des Betriebs des Hochdruckverdichters 17. Zunächst weist der Vorratsspeicher 14 dieselben Anzeigen- und Sicherungseinrichtungen auf, wie der Produkttank 7. So erkennt man einen Kugelhahn 3, eine Druckanzeige 9 mit Dreiwegehahn 8 sowie ein Sicherheitsventil 10. Auch der Ausgang des Produktstroms aus dem Speicher 14 ist analog dem Speicher 7 zu sehen. Über einen Kugelhahn gelangt der Produktstrom dann allerdings in ein weiteres Filter 2, von wo der Stickstoff über ein Magnetventil 15 mit einem Druckregler 11 und einer Anzeige 9 mit dem Nachverdichter 17 verbunden ist, wobei zwischen Magnetventil 15 und Druckregler 11 / Druckanzeige 9 noch ein Rückschlagventil / Unterdruckventil 16 vorgesehen ist. Diese Regeleinheit 15,16,11,9 lässt den Hochdruckverdichter über das eingestellte Druckband ein und ausschalten. Als Sicherheit ist das Unterdruckventil 16 eingebaut, welches ein Vakuum des Nachverdichters verhindert. Das Magnetventil 15 öffnet und schließt die Stickstoffzufuhr zum Nachverdichter 17. An den nach- oder Hochdruckverdichter 17 schließen sich zwei Filterstufe 2 mit jeweils einem Kugelhahn 3 an. Die beiden Filterstufen 2,2 sorgen als Schutzfiltration für eine Aufbereitung des nach verdichteten Stickstoffs in Atemluftqualität. Dies kann in zwei Schritten erfolgen. In der ersten nach geschalteten Filterstufe 2 findet eine Ölabscheidung mittels einer Ölabscheiderpatrone 2 statt. Beim zweiten Schritt werden Öl Dämpfe in einer Filterstufe 2 gebunden, welche z.B. Aktivkohle enthält. Die zweite Filterstufe 2 steht mit einem Flaschenbündel 18 in Verbindung. Das Flaschenbündel 18 ist ein Hochdruckvorratsspeicher für den Endverbraucher. Das Flaschenbündel 18 wird bis zum gewählten Enddruck vom Hochdruckverdichter 17 gefüllt. Die Stickstoffentnahme aus dem Flaschenbündel 18 erfolgt über nach geschaltete Hochdruck-Partikel-Filter 2, welche dazu dienen, Verunreinigungen zu binden, welche sich aus dem Flaschenbündel 18 gelöst haben könnten. Ferner sind zwischen Flaschenbündel 18 und Stickstoffabnahme noch Druckanzeige und -regler 9,11 sowie ein Überdruckventil 10. Vor dem Hochdruckpartikelfilter 2 wird permanent ein Teil des Produktstroms über einen Druckregler 11 mit Druckanzeige 9 und über ein weiteres Drosselventil 12 in eine Analyseeinheit umfassend einen Sauerstoffsensor 19 und einen Gasanalysator 20 abgezweigt. Mittels der beiden Analyseeinheiten 19 und 20 wird permanent der Restsauerstoffgehalt des Produktstickstoffs bestimmt. Die Ergebnisse der Bestimmung werden der zentralen Steuer- und Regelungseinheit 21 zugeführt. Die zentrale Steuer- und Regelungseinheit 21 steht auch in Verbindung mit verschiedenen Drucktransmittern 1, welche den Druck an verschiedenen Stellen des Systems abgreifen und weiterleiten. Ferner steht die Einheit 21 in Verbindung mit allen in der Anlage vorhandenen Ventilen sowie einem visuellen und/oder akustischen Alarmsignal. Die Zentraleinheit 21 überwacht sämtliche Rahmenbedingungen, die für den sicheren Betrieb der Gesamtanlage notwendig sind. Wenn ein Betriebsstörung vorliegt, wird der Hochdruckverdichter 17 ausgeschaltet und es wird der Alarm 22 geschaltet. Ohne den fehler zu beheben, lässt sich der Hochdruckverdichter 17 nicht mehr starten.

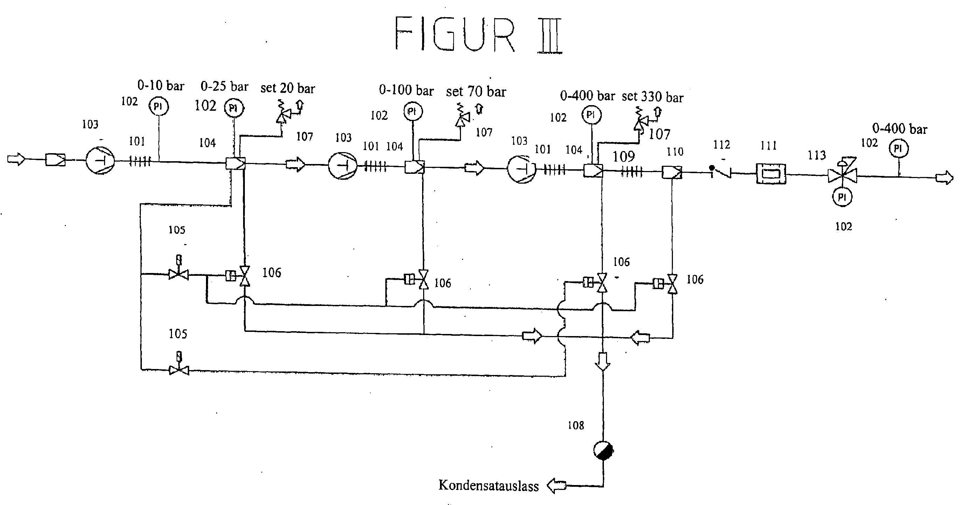

In der Figur 3 ist ein Fließdiagramm für einen Hochdruckverdichter 17 dargestellt. Man erkennt drei aufeinanderfolgende Verdichterstufen 103, welche zur stufenweisen Verdichtung des angesaugten Stickstoffs dienen.

Der Hochdruckverdichter 17 saugt den Stickstoff an der ersten Zylinderstufe 103 über einen vor geschalteten Filter (ohne Bezugszeichen) an und verdichtet den Stickstoff stufenweise zunächst auf 4-6 bar, sofern der Eingangsdruck nicht bereits höher lag, und dann auf 12-16 bar. Nach der ersten Zylinderstufe 103 durchströmt der Stickstoff eine Kühlschlange 101. An die Kühlung 101 schließt sich ein Filter in Form eines Zyklonabscheiders 104 an, welches eine Druckanzeige 102 sowie ein Sicherheitsventil 107 umfasst, das bei einem voreingestellten Druck von etwa 20 bar entlastet.

Von der ersten Filtration 104 strömt der Stickstoff in eine zweite Zylinderstufe oder Verdichterstufe 103, wo der Stickstoff auf etwa 50 bis 60 bar verdichtet wird. Von der zweiten Verdichterstufe 103 strömt der Stickstoff wiederum durch eine Kühlschlange 101 in eine weitere Filtration 104, welche mit Druckanzeige 102 und Sicherheitsventil 107 in Verbindung steht, wobei das Sicherheitsventil etwa so eingestellt ist, dass es ab einem Druck von 70 bar entlastet. Auch diese Filtration 104 ist als Zyklonabscheider ausgeführt. Nun saugt eine dritte Verdichterstufe 103 den Stickstoff an und verdichtet diesen auf den gewünschten Enddruck (40-400 bar). Der Stickstoff fließt erneut durch eine Kühlschlange 101 und einen Zyklonabscheider 104, welcher mit Druckanzeige 102 und Überdruckventil 107 ausgestatte ist.

Jede der Filtrationen 104, die als Zyklonabscheider ausgeführt sind ist über ein Pneumatikventil 106 mit einem Behälter für Kondensat 108 verbunden, welcher zum Auffangen des abgeschiedenen Kondensats dient.

Nach der dritten Verdichterstufe fließt der hoch verdichtete Stickstoff durch einen Nachkühler 109 in ein Filter 110. Hierbei handelt es sich um einen Ölabscheider. Die Ablassleitung von diesem Abscheider 110 wird bei Anlaufen des Hochdruckverdichters 17 über ein Pneumatikventil 106 für die vorgewählte oder sich auf Basis der Produktanalytik über die Steuer- und Regeleinheit ergebende Zeit geöffnet. Auf diese Art und Weise wird der gesamte Hochdruckverdichter durchgespült und ein Einbringen von Verunreinigungen wird vermieden.

Vom Ölabscheider 110 fließt der Stickstoff durch ein Rückschlagventil 112, welches ein Zurückströmen des Stickstoffes verhindert. Danach folgt ein zweiter Filter 111, der für Öldämpfe vorgesehen ist. An diese Filtration schließt sich ein Mindestdruckventil 113 an, was den sicheren Betrieb des zweiten Filters 111 gewährleistet. Von dort aus fließt der Stickstoff in das nicht näher dargestellte Flaschenbündel.

Weitere Ausführungsformen und Vorteile der Erfindung ergeben sich aus den nachfolgenden Patentansprüchen.

## Patentansprüche

1. Verfahren zur Herstellung von verdichtetem Stickstoff mit einem Restsauerstoffgehalt von höchstens 1000 ppm, 10 ppm oder 5 ppm mittels eines Stickstoffgenerators, umfassend
in Strömungsrichtung des Stickstoffs miteinander verbunden
A) Mittel zur Stickstofferzeugung aus Druckluft;
B) Verdichtungsmittel zur Verdichtung des in a) erzeugten Stickstoffs auf einen Druck im Bereich von größer 10 bis etwa 400 bar
aufweisend einen Nach- oder Hochdruckverdichter; und
C) Mittel zur Speicherung des in b) verdichteten Stickstoffs;
D) wobei stromaufwärts der Mittel zur Speicherung Mittel zur Ab- und/oder Umleitung des verdichteten Stickstoffs vorgesehen sind,
bei welchem Verfahren man
a) Stickstoff aus Druckluft erzeugt;
b) den in a) erzeugten Stickstoff mittels eines Verdichtungsmittels umfassend einen Nach- oder Hochdruckverdichter auf einen Druck im Bereich von größer 10 bis etwa 400 bar verdichtet; und
c) den gemäß b) verdichteten Stickstoff speichert;
**dadurch gekennzeichnet, dass** man beim Anfahren oder Einschalten des Verdichtungsmittels oder sobald der Sauerstoffgehalt des in Schritt b) verdichteten Stickstoffs einen vorgegebenen Grenzwert überschreitet, den in Schritt b) des Verfahrens verdichteten Stickstoff für einen bestimmten frei vorwählbaren oder regelbaren Zeitraum ab- oder umleitet, so dass er für den genannten Zeitraum nicht in die Mittel zur Speicherung geleitet wird, wobei der Nach- oder Hochdruckverdichter in dem Zeitraum gespült wird, in dem der verdichtete Stickstoff in einem Kreis geführt oder abgeblasen wird, wobei der im Kreis geführte verdichtete Stickstoffstrom wenigstens ein Filtermaterial und/oder wenigstens einen Abscheider passiert.

2. Verfahren nach Anspruch 1, **dadurch gekennzeichnet, dass** man das Verdichtungsmittel bei jedem Anfahren für einen Zeitraum von 0,1 bis 20 Minuten, vorzugsweise 1 bis 5 Minuten, mit vom Verdichtungsmittel erzeugten und verdichteten Stickstoff spült und den Spülstickstoff verwirft.

3. Verfahren nach Anspruch 1, **dadurch gekennzeichnet, dass** man vor Ort den Gehalt an Restsauerstoff des die Verdichtungsmittel verlassenden Stickstoffs bestimmt und den Spülvorgang solange fortsetzt, bis der die Verdichtungsmittel verlassende Stickstoff die vorgewählte Reinheit aufweist.

4. Verfahren nach Anspruch 3, **dadurch gekennzeichnet, dass** man den Spülvorgang solange fortsetzt, bis der Restsauerstoffgehalt des Stickstoffs gleich oder kleiner 10 ppm ist.

5. Verfahren nach einem der Ansprüche 1-4, **dadurch gekennzeichnet, dass** man einen Stickstoffgenerator einsetzt, bei dem die Mittel zur Ableitung des verdichteten Stickstoffs ein Ventil in einer Leitung umfassen, welche die Verdichtungsmittel und die Mittel zur Speicherung verbindet.

6. Verfahren nach Anspruch 5, **dadurch gekennzeichnet, dass** man einen Stickstoffgenerator einsetzt, bei dem das Ventil zur Ableitung des verdichteten Stickstoffs über eine Leitung mit einem Partikelfilter verbunden ist.

7. Verfahren nach Anspruch 6, **dadurch gekennzeichnet, dass** man einen Stickstoffgenerator einsetzt, bei dem das Partikelfilter mit einem Aktivkohlefilter verbunden ist.

## Claims

1. The process for producing compressed nitrogen with a residual oxygen content of 1000 ppm, 10 ppm, or 5 ppm, using a nitrogen generator,
fully interconnected in the nitrogen's flow direction
A) a means of nitrogen generation from compressed air;
B) consolidation agent for compressing the a) produced nitrogen to a pressure of more than 10 up to approx. 400 bar
comprising a booster or high-pressure compressor; and
C) a means of storing the b) compressed nitrogen;
D) whereby upstream of the storage, derivation and/or diversion of the compressed nitrogen is intended,
in which process, one
a) produces nitrogen from compressed air;
b) compresses it in the a) produced nitrogen using a consolidation agent, comprising a booster or high-pressure compressor with a pressure of more than 10 up to approx. 400 bar;
c) stores the appropriately b) compressed nitrogen;
thus **characterized in that** one starts up or powers up the consolidation agent, or as soon as the oxygen content exceeds a given limit of the compressed nitrogen in step b), which starts or powers up the process of compressed nitrogen in step b) for a specific freely preselectable or adjustable period, so that it is not directed toward use as storage for the selected time period, whereby the booster or high-pressure compressor is purged **in that** period and the compressed nitrogen is directed or discharged into a circuit, whereby the compressed nitrogen stream, directed to the circuit, passes at least a filter material and / or a cutter.

2. The system of claim 1, in which the consolidation agent is purged each time with the nitrogen produced and compressed by the consolidation agent for a period of .1 to 20 minutes, preferably 1 to 5 minutes, and the purged nitrogen is discarded.

3. The system of claim 1, in which one determines on-site the residual oxygen content of the nitrogen that the consolidation agent is discarding, and continues the purging process until the nitrogen purged by the consolidation agent demonstrates the preselected purity.

4. The system of claim 3, in which one continues the purging process until the residual oxygen content of the nitrogen is less than or equal to 10 ppm.

5. The system of one of claims 1-4, in which one uses a nitrogen generator in which the means for deriving compressed nitrogen comprise a valve in a pipe which connects the consolidation agent and the storage area.

6. The system of claim 5, in which one uses a nitrogen generator in which the valve for deriving compressed nitrogen is connected to a particle filter via a pipe.

7. The system of claim 6, in which one uses a nitrogen generator in which the particle filter is connected to an activated carbon filter.

## Revendications

1. Méthode pour la production d'azote condensé avec une teneur maximale en oxygène résiduel de 1 000 ppm, 10 ppm ou 5 ppm, au moyen d'un générateur d'azote, entièrement relié dans le sens d'écoulement de l'azote
A) moyen de génération d'azote à partir d'air comprimé ;
B) agent de compression pour la condensation de l'azote généré a) à une pression sur une plage comprise en 10 bar minimum et environ 400 bar
présentant un surpresseur ou un compresseur à haute pression ; et
C) moyen de stockage de l'azote condensé dans b) ;
D) sachant qu'en amont sont prévus un moyen de stockage de l'azote condensé, un moyen de dérivation et / ou de déviation de l'azote condensé,
méthode avec laquelle on
a) génère de l'azote à partir d'air comprimé ;
b) condense l'azote généré dans a) au moyen de l'agent de compression comprenant un surpresseur ou un compresseur à haute pression à une pression sur une plage comprise en 10 bar minimum et environ 400 bar ; et
c) stocke l'azote condensé conformément à b) ;
**caractérisée en ce que**, lors du démarrage ou de l'activation de l'agent de compression ou dès que la teneur en oxygène de l'azote condensé à l'étape b) dépasse un seuil prédéfini, on dérive ou dévie l'azote condensé à l'étape b) de la méthode pour une certaine période librement définissable ou réglable, de sorte qu'il n'est pas conduit dans le moyen de stockage pendant la période définie, sachant que le surpresseur ou le compresseur à haute pression est rincé pendant la période pendant laquelle l'azote condensé n'est pas conduit ou soufflé dans un circuit, sachant que le flux d'azote condensé conduite dans le circuit passe par au moins un matériel filtrant et / ou au moins un séparateur.

2. Méthode conformément à la revendication 1, **caractérisée en ce que** l'agent de compression est rincé lors de chaque démarrage pour une période de 0,1 à 20 minutes, de préférence 1 à 5 minutes, avec l'azote généré et condensé par l'agent de compression et **en ce que** l'azote rincé est rejeté.

3. Méthode conformément à la revendication 1, **caractérisée en ce que** l'on détermine sur place la teneur en oxygène résiduel de l'azote quittant l'agent de compression et **en ce que** l'on poursuit le processus de rinçage jusqu'à ce que l'azote quittant l'agent de compression présente la pureté prédéfinie.

4. Méthode conformément à la revendication 3, **caractérisée en ce que** l'on poursuit le processus de rinçage jusqu'à ce que l'oxygène résiduel de l'azote soit égal ou inférieur à 10 ppm.

5. Méthode conformément à l'une des revendications 1 à 4, **caractérisée en ce que** l'on utilise un générateur d'azote dans lequel les moyens de dérivation de l'azote condensé incluent une soupape dans une conduite qui relie l'agent de compression et les moyens de stockage.

6. Méthode conformément à la revendication 5, **caractérisée en ce que** l'on utilise un générateur d'azote dans lequel la soupape pour la dérivation de l'azote condensé est reliée à une conduite avec un filtre à particules.

7. Méthode conformément à la revendication 6, **caractérisée en ce que** l'on utilise un générateur d'azote dans lequel le filtre à particules est relié à un filtre à charbon actif.
